# EUROPEAN PATENT APPLICATION

(11) **EP 2 468 808 A1**
(43) Date of publication of application: **27.06.2012**
(21) Application number: 10382357.1
(22) Date of filing: 27.12.2010
(51) Int. Cl.: C08J 11/04, C08J 11/20, C10G 1/10

(54) **Process and facility for recycling tires and plastics**

(71) Applicant: Maxam Enviroconsult, S.L., 28042 Madrid (ES)
(72) Inventor: Bao Iglesias, Manuel, E-28042, Madrid (ES); Macías Vázquez, Felipe, E-28042, Madrid (ES)
(74) Representative: ABG Patentes, S.L.

(57) **Abstract**

The invention describes a process and a facility for recycling a solid product containing a fraction soluble in a high boiling point hydrocarbon (HBPH), for example, tires and plastic materials, which comprises contacting said solid product with an HBPH under conditions which allow solubilizing the fraction of said product soluble in said HBPH and generating a heavy liquid phase, a gaseous phase and, optionally, a solid phase; removing said phases; and separating the fraction of condensable gases from the fraction of non-condensable gases.

## Description

### Field of the Invention

The present invention is encompassed in product recycling and is generally related to a process for recycling products containing a fraction soluble in a high boiling point hydrocarbon (HBPH), among which are tires, scrap tires, and plastics, for example, as well as to a suitable facility to carry out said process.

### Background of the Invention

The increasing amount of accumulated solid wastes due to excessive product consumption and the lack of suitable systems for later recycling or reusing is a real warning to society.

The massive manufacture of organic polymers (plastics, tires, etc.) and the difficulties for disposing of them once used is one of the most serious environmental problems in recent years worldwide, because after using them, a large portion of them are uncontrollably abandoned or otherwise deposited in dumps (except tires), generally without carrying out any treatment.

Tires are mostly formed by three products: rubber, a steel belt and textile fiber. Other materials such as zinc oxide, magnesium oxide or carbon black are further added to the rubber to improve its properties or to facilitate vulcanization. Scrap tires (STs) therefore are a waste the chemical composition and thermomecahnical performance of which largely inhibits their recycling. In addition, STs have a high calorific value, comparable to that of good quality carbons, which makes it possible that their utilization for energy purposes can be a feasible solution from the technical and economical point of view.

The new energy recovery technologies currently being developed are based, among others, on gasification and pyrolysis processes which require feeding the shredded ST; nevertheless, in these cases, the cost of crushing and shredding is a determining factor for the profitability of the industrial plant as well as operating problems associated with working temperatures greater than 500°C.

The alternatives which do not include shearing STs imply the use of large facilities and equipment, such as complete tire combustion facilities which operate in high temperature (1.000-1.200°C) combustion conditions. The efficiency of these systems is further mitigated by the low heat transmission coefficients from gas-solid convection as well as by the low heat storage offered by the gas.

Recycling STs in a reactor using a vegetable oil (WO 99/09092), worn motor oil (WO 03/052029) or oil mixed with the oil product recycled from the ST itself (US 4384151) has been described. In general, the processes described in these documents operate discontinuously; they therefore have the drawbacks of said form of operation.

Spanish patent ES 2277799 A1 describes a process and system for recycling tires leading to a series of products, none of which is a degasified liquid fuel with calorific characteristics similar to that of a fuel-oil.

Likewise, there has been a spectacular increase in recent years in plastic consumption, the use of such plastics having been extended not only in the already conventional field of containers but also to the field of component manufacturing in the automotive, housing, clothing industries and industries of consumer goods of any type . However, the success in the technological development of plastic materials has not been brought with it a provision for their recycling. It is estimated that less than 15% of plastic material wastes are recovered or recycled worldwide. The plastics contained in the municipal solid waste (MSW) are mostly polyethylene (PE) and polypropylene (PP) (about 60%) and in a lower proportion, polystyrene (PS), polyethylene terephthalate (PET), polystyrene-butadiene (PS-BD), poly(methyl methacrylate) (PMMA), etc.

Although different methods for recycling tires and plastics have been described, all of them have some drawbacks or limitations, therefore the need to develop methods for treating solid wastes of this type (e.g., STs and plastics) which are alternatives to the existing methods which overcome all or part of the aforementioned drawbacks still exists. In this sense, said methods and systems must be environmentally-friendly and generates usable products. Furthermore, in relation to the STs, said methods must advantageously make the use of whole tires possible.

### Summary of the Invention

The authors of the present invention have discovered a process suitable for treating solid wastes, such as STs or plastics, which allows an efficient recycling of these materials and/or the exploitation of their calorific value.

Thus, the present invention provides a process which is an alternative to current energy recovery processes for the treatment of solid wastes of this type and it is based on the solubilization of said solid wastes in a liquid medium comprising a high boiling point hydrocarbon (HBPH), such as a paraffinic (paraffin) or olefinic (olefin) type solvent with a boiling point equal to or greater than 250°C, typically comprised between 250°C and 400°C, for example, mineral oils, feints, fuel-oil, etc.

The use of an HBPH (e.g., mineral oil, heavy fuel, etc.) as a medium for solubilizing said solid wastes does not require the use of such high temperatures because the heat transmission between the solid waste and the liquid phase (HBPH) is high and homogenous, and the degree of penetration of said HBPH into the solid waste is greater due to the nature of hydrocarbon polymers of both the rubber or plastic and the solvents used which, at the described temperatures, have a high mutual solubility and which, in the case of plastics, involves dissolution between liquid phases since the melting temperatures of different plastics, for example, PE and PP, are exceeded. Precise operating temperature control allows orientating the process towards obtaining gases (cracking) or towards obtaining liquids (solubilizing) the presence of both phases (gas and liquid) being inevitable.

Thus, in one aspect, the invention provides a process for recycling a solid product comprising at least a fraction soluble in a high boiling point hydrocarbon (HBPH), said process comprising solubilizing said product in an HBPH by means of reactive dissolution, whereby a heavy liquid phase, a gaseous phase and, optionally, a solid phase are generated, and there is a subsequent treatment of said phases for generating usable products.

In another aspect, the invention relates to a facility for putting said process into practice.

### Brief Description of the Drawings

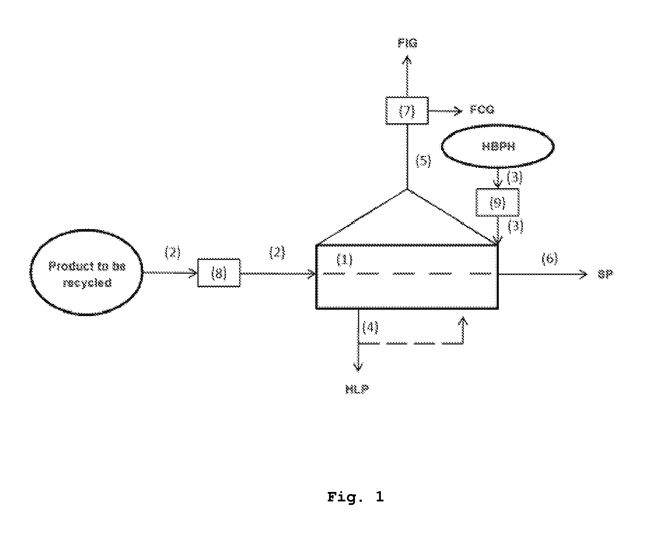

Figure 1 is a schematic depiction of a facility suitable for putting into practice the process for recycling a solid product comprising at least a fraction soluble in a high boiling point hydrocarbon, provided by this invention.

### Detail Description of the Invention

### Process of the invention

In one aspect, the invention relates to a process for recycling a solid product comprising at least a fraction soluble in a high boiling point hydrocarbon, hereinafter "process of the invention", which comprises:
a) contacting said solid product comprising at least a fraction soluble in a high boiling point hydrocarbon with a high boiling point hydrocarbon (HBPH) under conditions which allow solubilizing the fraction of said product soluble in said HBPH and generating:
   - a heavy liquid phase (HLP) comprising the products in liquid phase resulting from solubilizing said solid product comprising at least a fraction soluble in an HBPH in said HBPH; and
   - a gaseous phase (GP) comprising a fraction of condensable gases and a fraction of non-condensable gases; and, optionally,
   - a solid phase (SP) comprising the fraction insoluble in said HBPH of said solid product comprising at least a fraction soluble in HBPH;
b) separately removing each of said HLP, GP and, optionally, SP phases; and
c) condensing said gaseous phase (GP) and separating the fraction of condensable gases from the fraction of non-condensable gases.

Step a) of the process of the invention comprises subjecting said solid product comprising at least a fraction soluble in an HBPH to a solubilization treatment by means of reactive dissolution of said product in an HBPH under conditions which allow solubilizing the fraction of said product soluble in said HBPH and generating the HLP, GP and, optionally, SP fractions indicated above.

As it is used herein, the term "solid product comprising at least a fraction soluble in an HBPH", occasionally referred to in this description for simplicity's sake as "product to be recycled according to the invention", includes any solid waste, such as the products resulting from its cracking, comprising at least a fraction soluble in an HBPH. Non-limiting illustrative examples of products soluble in an HBPH include natural or synthetic rubber, formed by polyisoprene, polybutadiene, styrene-butadiene, etc.; plastic materials, e.g., polyethylene (PE), polypropylene (PP), polystyrene (PS), polyethylene terephthalate (PET), polystyrene-butadiene (PS-BD), poly(methyl methacrylate) (PMMA), etc.

In a particular embodiment, said product to be recycled according to the invention is selected from the group consisting of tires, plastic materials and mixtures thereof. In a specific embodiment, said tires are scrap tires (STs). Tires are generally formed by rubber (natural and synthetic), a steel belt and textile fiber; the rubber used in turn for manufacturing tires is formed by a group of polymers including polyisoprene, polybutadiene, and styrene-butadiene, the latter being the most common polymer present in STs. As it is used herein, the term "tire" includes any type of tire, for example, tires from airplanes, bicycles, cars, trucks, bikes, industrial vehicles, tractors, etc. The process of the invention can be applied on previously shredded STs or, preferably, on non-shredded STs.

As previously mentioned, said HBPH is a paraffinic or olefinic type solvent with a normal boiling point equal to or greater than approximately 250°C, preferably comprised between approximately 250°C and approximately 400°C. Virtually any paraffinic or olefinic type solvent with a normal boiling point equal to or greater than approximately 250°C, preferably comprised between approximately 250°C and approximately 400°C, in which the rubber, plastic materials, e.g., PE, PP, PS, PET, PS-BD, PMMA, etc. are completely or partially soluble, can be used as HBPH for putting the process of the invention into practice. Non-limiting illustrative examples of HBPHs include mineral oils (e.g., used or fresh oils), feints (heavy fraction) of mineral oils, fuel-oil, heavy fuel with a high boiling point (equal to or greater than 350°C), etc. For putting the process of the invention into practice, an HBPH or a mixture of two or more HBPHs can be used.

In a particular embodiment, said HBPH is a mineral oil comprising the heavy fraction (feints) of a mineral oil used in treatment plants for treating oils used in automotive and industrial machineries, the main characteristic of which is its high boiling point, equal to or greater than 350°C, preferably, equal to or greater than 380°C; in a specific embodiment, said HBPH is a mineral oil used with a bubble point (T_{b}) or a relatively high initial vaporization point (comprised between 360°C and 380°C), which further has a high calorific value (GCV equal to or greater than 10,000 kcal/kg approximately).

According to the process of the invention, the solubilization of the product to be recycled according to the invention is carried out under suitable conditions which allow solubilizing the fraction of said product to be recycled according to the invention soluble in said HBPH and generating the aforementioned HLP, GP and, optionally, SP fractions. By way of non-limiting illustration, said conditions include the operating temperature, the operating pressure, the operating or retention time of said product to be recycled according to the invention in said HBPH, the "product to be recycled according to the invention/HBPH" ratio, etc.

In a particular embodiment, the solubilization of said product to be recycled according to the invention [step a)] is carried out at an operating temperature comprised between approximately 250°C and approximately 400°C, at an operating pressure comprised between approximately 1 bar (10⁵ Pa) and approximately 1.5 bars (1.5x10⁵ Pa) (absolute pressure). Although the operating time (or retention time of said product to be recycled according to the invention in said HBPH) may vary within a wide range, in a particular embodiment, the operating time is comprised between 1 and 3 hours in steady state. The "product to be recycled according to the invention/HBPH" ratio can also vary within a wide range; however, in a particular embodiment, the "product to be recycled according to the invention/HBPH" mass ratio is comprised between approximately 60/40 and approximately 40/60, advantageously at a mass ratio of approximately 50/50 (1/1), i.e., 1 kg of HBPH is used for each kg of product to be recycled according to the invention.

Although said conditions may vary depending, among other factors, on the nature of the product to be recycled according to the invention, and on the HBPH used, it has been observed in practice that the aforementioned HLP, GP and, optionally, SP fractions are obtained when the solubilization of said product to be recycled according to the invention, particularly ST, in an HBPH is carried out:
at an operating temperature comprised between 250°C and 400°C,
at an operating pressure comprised between approximately 1 and 1.5 bars (absolute pressure),
with an operating time comprised between 1 and 3 hours in steady state, and
with a "product to be recycled according to the invention/HBPH" mass ratio comprised between approximately 50/50, typically at a mass ratio of approximately 1/1, i.e., 1 kg of HBPH is used for each kg of product to be recycled according to the invention.

The solubilization process for said product to be recycled according to the invention can be performed by stirring; alternatively, if desired, said solubilization process can be performed in the absence of stirring (e.g., in laminar flow conditions).

Although the particle size of the product to be recycled according to the invention is a factor favoring the solubilization process (lower size favors kinetic degradation and subsequent solubilization of the fraction soluble in HBPH), different tests performed by the inventors have shown that, to put the process of the invention into practice, the specific surface of the product to be recycled according to the invention is not a determining factor, which allows treating both said shredded and non-shredded products, e.g., STs, both shredded and whole (non-shredded STs), properly sizing the facilities where the solubilization of the fraction soluble in HBPH of the ST is performed and adjusting the operating temperature and time. When the ST is shredded, it can be placed in baskets and these are submerged in a tank containing the HBPH; alternatively, when the ST is whole (non-shredded), the facility for putting the process of the invention into practice includes means for securing the ST, introducing it into the solubilization tank and removing the resulting SP after solubilizing the soluble fraction; said SP will include, among other materials, the metal belt used in manufacturing tires.

The solubilization process for the product to be recycled according to the invention in an HBPH can be performed both discontinuously and continuously, preferably continuously; in this latter case, if desired, stirring can be performed with the tangential flow at different points of the tank in which the solubilization step is performed for which part of the liquid phase is extracted, reheated and reintroduced (e.g., by means of pumping) at high pressure (the turbulences aid in solubilizing the fraction soluble in HBPH of the product to be recycled according to the invention).

Step a) of the process of the invention can be carried out in a suitable facility comprising at least a heated solubilization tank or one that is provided with heating means to which the HBPH is added. In a particular embodiment, said facility comprises a single solubilization tank, whereas in another particular embodiment, said facility comprises two or more solubilization tanks arranged in cascade, operatively connected to one another, wherein the same reactions take place. In a particular embodiment, the process of the invention further comprises recirculating all or part of the liquid phase (HLP) generated during the solubilization process in said solubilization tank.

Operating under suitable conditions, the solubilization of the fraction soluble in HBPH contained in said product to be recycled according to the invention allows obtaining the aforementioned HLP, GP and, optionally SP phases.

Once step a) has ended, each of the generated phases (HLP, GP and, optionally, SP) [step b)] is extracted separately.

The HLP comprises the products in liquid phase resulting from solubilizing in an HBPH the fraction soluble in said HBPH of the product to be recycled according to the invention, and is the main product of the solubilization process for said product to be recycled according to the invention. The removal of said HLP can be performed by conventional methods; by way of illustration, the solubilization tank in which this step is carried out can be provided with means for the outlet of liquids arranged in the lower part of said solubilization tank, such that said HLP can leave by gravity through said means.

Said HLP has a high energy content and a very low volatility, with a relatively low ash content, comparable to that of used mineral oil or biomass of an agro-forestry origin, and it further has chemical and thermal characteristics similar to those of heavy fuel, therefore it can be used as fuel. By way of illustration, in a particular embodiment, said HLP has a high energy content (gross calorific value (GCV) of approximately 10,000 kcal/kg) and a very low volatility (bubble point greater than 380°C), with a relatively low ash content (typically less than 10%, preferably less than 5%, for example, equal to or less than approximately 3% by mass) and a relatively low sulfur content (typically less than 5%, preferably less than 2.5%, still more preferably less than 2%, for example, approximately 1.6%) and significantly less than the value considered as limit values for commercial fuel-oils, so it can be used as liquid fuel.

Said HLP can additionally be used, if desired, in a thermal conversion and gasification plants for the purpose of obtaining synthesis gas with a high energy value and a minimum impurity content, typically at trace level. This alternative is particularly interesting when the product to be recycled according to the invention is an ST because in this case, due to the carbon black and impurity content, it can be treated by means of said process for gasification and controlled partial oxidation to obtain a high purity synthesis gas (high hydrogen and carbon monoxide content) which can be used, by way of non-limiting illustration, for energy purposes. Said synthesis gas obtained after the gasification of the HLP, if desired, can be used to power an alternative engine or a gas turbine coupled to a generator system for the purpose of producing electric energy.

In addition, the GP obtained in step a) of the process of the invention comprising a fraction of condensable gases (FCG) and a fraction of non-condensable or incondensable gases (FIG), is subjected to a condensation process [step c)] for condensing the condensable gases and separating the fraction of condensable gases (FCG) from the fraction of incondensable gases (FIG).

The condensation of the condensable gases can be performed by conventional methods, for example, cooling the hot gases by means of using a heat exchanger, a cooled coil, etc. In a particular embodiment, said GP is removed through a coil submerged in water so that the condensation of the condensable gases having a boiling temperature greater than 100°C occurs, thus obtaining a product referred to as "diesel-like" in this description, the characteristics of which allow it to be assimilated in a diesel fuel or refined petrol type fuel, which can be used as fuel, for example, as fuel for furnace or boiler burners for energy exploitation, or in engines for mechanical work or electricity production, or, alternatively, as a viscosity regulator for the solubilization of the product to be recycled according to the invention in step a) of the process of the invention.

The fraction of incondensable gases (FIG) contained in said GP comprises the non-condensable gases from the solubilization process for the product to be recycled according to the invention in an HBPH and, in general, it is formed by light gases from the cracking of said product to be recycled according to the invention and from the degradation of the HBPH used, for example, petroleum gas (mixture of very light hydrocarbons which are stored in normal conditions in gaseous form), etc. This fraction of incondensable gases (FIG) can also be used, if desired, as fuel for furnace or boiler burners for energy exploitation, or in engines for mechanical work or electricity production.

To collect and condense said GP, the facility for putting the process of the invention into practice contemplates the possibility of providing the solubilization tank with means for the extraction and outlet of gases and means for carrying said gases and condensing them.

Likewise, as mentioned previously, step a) of the process of the invention can generate a solid phase (SP) comprising the fraction of the product to be recycled according to the invention insoluble in an HBPH; nevertheless, occasionally, if the proportion of the resulting solid phase after putting the process of the invention into practice was small, then said solid phase could be dispersed in the liquid phase and not collected. Said SP is obtained when the product to be recycled according to the invention contains a fraction insoluble in the HBPH and its composition will depend on the nature of the product to be recycled according to the invention. By way of illustration, in the case of an ST, an SP, mostly containing fibers and steel mat from the reinforcement layer/belting of the ST partially coated with degraded and solubilized rubber and/or textile material is obtained after the solubilization process for the fraction soluble in HBPH of said ST; if desired, the metal mat can be subjected to a cleaning process by means of pyrolysis-combustion to eliminate the semi-liquid rubber impregnated in the metal and to obtain a high quality steel to be sold as scrap

The person skilled in the art will understand that if the product to be recycled according to the invention lacks the fraction insoluble in HBPH, said SP will not be generated.

The process of the invention contemplates the possibility of performing prior treatments on the product to be recycled according to the invention to duly condition the product; said prior treatments include, by way of non-limiting illustration, washing the product, the shearing thereof (optional), etc.

The process of the invention allows exploiting and recovering a solid waste, such as an ST or a plastic, and obtaining:
- a degasified liquid fuel (HLP) with a high energy content (approximate gross calorific value of approximately 10,000 kcal/kg) and a very low volatility (bubble point greater than 380°C), the characteristics of which are comparable to those of fuel-oil which, if desired, can be used in a thermal conversion and gasification plant for the purpose of obtaining a synthesis gas with high energy value and a trace level impurity content;
- a liquid product ("diesel-like"), the characteristics of which allow it to be assimilated in a diesel fuel or refined petrol type fuel;
- a fraction of incondensable gases (FIG) that can be assimilated in a petroleum gas; and
- optionally, a solid waste which by way of illustration, in the case of an ST, is mostly a scrap metal converted into byproduct and easily recoverable for the subsequent sale thereof as scrap.

Other known processes for recycling products of this type, for example, STs, require grinding and crushing said STs, which entails a high energy and economic consumption because STs are hard and abrasive materials and current techniques (e.g., shearing) involve a very high energy consumption as well as wear of the material used. Unlike said known high cost processes, the process of the invention can be performed without the need to have to shred the product to be recycled (e.g., STs) and furthermore, in the event that said product is an ST, it allows complete recovery of the steel mat (wires) which will not be possible in the case of using shredded STs, the very manageable generation of a product in liquid phase and the generation of some products contained in an HLP which is more suitable for incorporation thereof in material recovery processes (e.g., in the case of their use in asphalt bitumens, etc.). The process of the invention can also be performed continuously.

### Facility of the invention

The process of the invention is carried out in a facility suitable for putting it into practice. Therefore, in another aspect, the invention relates to a facility, hereinafter facility of the invention, for recycling a product comprising at least a fraction soluble in an HBPH (product to be recycled according to the invention); suitable for putting the process of the invention into practice, said facility comprising:
- at least one solubilization tank (1) provided with means for the inlet of a solid product to be recycled comprising at least a fraction soluble in an HBPH (2), means for the inlet of a liquid phase comprising an HBPH (3), means for the outlet of a liquid phase (4), and means for the outlet of a gaseous phase (5);
- a system for transporting or containing said solid product to be recycled comprising at least a fraction soluble in an HBPH (2) provided with means for transporting or containing said product to be recycled according to the invention and introducing it into said solubilization tank (1);
- means for feeding a liquid phase comprising an HBPH (3) to said solubilization tank (1); and
- a system for condensing a gaseous phase (7) operatively connected to said means for the outlet of a gaseous phase (5).

The solubilization tank (1) is the tank or reactor in which the solubilization of the fraction soluble in an HBPH of the product to be recycled according to the invention takes place, therefore different processes (dissolution, cracking, etc.) are combined in said solubilization tank (1) which lead to the solubilization of the fraction soluble in HBPH contained in the product comprising at least a fraction soluble in an HBPH. Said solubilization is carried out at a high temperature, typically at a temperature comprised between approximately 250°C and approximately 400°C, depending on the nature and composition of the product to be recycled according to the invention, so the materials needed for its manufacture must therefore meet this requirement.

In a particular embodiment, the facility of the invention comprises a single solubilization tank (1). In another particular embodiment, said facility of the invention comprises two or more solubilization tanks (1), for example, 2, 3, 4, 5, 6, or even more, in cascade; the same reactions take place in all of them.

The solid product comprising at least a fraction soluble in an HBPH (2) and the liquid phase comprising an HBPH (3) is introduced into said solubilization tank (1).

The introduction of the solid product comprising at least a fraction soluble in an HBPH (2) into said solubilization tank (1) is performed by suitable means, for example, by means of a system for transporting or containing said solid product to be recycled comprising at least a fraction soluble in an HBPH (2) and introducing it into said solubilization tank (1). In a particular embodiment, the solid product comprising at least a fraction soluble in an HBPH (2) can be subjected to a prior treatment (e.g., washing, shearing, grinding, etc.), therefore, in a particular embodiment, the facility of the invention comprises a module or device for conditioning (8) said solid product comprising at least a fraction soluble in an HBPH (2) wherein said solid product is subjected to said prior treatment in said module or device for conditioning (8) the solid product comprising at least a fraction soluble in an HBPH (2).

Likewise, the liquid phase comprising the HBPH (3) is introduced into said solubilization tank (1) through means suitable for feeding said liquid phase comprising an HBPH (3). The process of the invention is performed at a high temperature, generally comprised between approximately 250°C and 400°C, therefore said liquid phase comprising the HBPH (3) can be heated before being introduced into the solubilization tank (1), in which case the facility of the invention comprises means for heating (9), for example, a heater, a heat exchanger, etc., said liquid phase comprising the HBPH (3) which will be located before said liquid phase is fed to the solubilization tank (1), as shown in Figure 1, or alternatively, said liquid phase comprising the HBPH (3) can be heated directly in the solubilization tank (1), in which case said solubilization tank (1) will be provided with means for heating the liquid phase comprising the HBPH (2) and/or heat-insulated for maintaining the temperature of said liquid phase comprising the HBPH (3) at the temperature suitable for performing the process of the invention.

In a particular embodiment, the facility of the invention comprises a solubilization tank (1) provided with stirring means (not shown) to stir both the liquid phase comprising the HBPH (3) and the solid product comprising at least a fraction soluble in an HBPH-HBPH" mixture for the purpose of favoring solubilization of the fraction soluble in HBPH of said solid product comprising at least a fraction soluble in an HBPH (2) and maintaining a uniform temperature in said solubilization tank (1); this solubilization tank is particularly useful when the treatment of the solid product comprising at least a fraction soluble in an HBPH by means of the process of the invention is performed discontinuously.

In another particular embodiment, the means for the inlet of the solid product comprising at least a fraction soluble in an HBPH (2) and the means for the inlet of the liquid phase comprising the HBPH (3) are located at opposite ends of the solubilization tank (1) for feeding said products [solid product comprising at least a fraction soluble in an HBPH (2) and HBPH (3)] in countercurrent, such that the solubilization of the fraction soluble in HBPH contained in the solid product comprising at least a fraction soluble in an HBPH (2) occurs in countercurrent with respect to the HBPH (3); for the purpose of optimizing said solubilization reaction, the means for the outlet of the liquid fraction (4) are preferably arranged in a position close to the feeding of the solid product comprising at least a fraction soluble in an HBPH (2); therefore, in a particular embodiment, said solubilization tank (1) is configured such that the means for the inlet of the solid product comprising at least a fraction soluble in an HBPH (2) and the means for the inlet of the liquid phase comprising the HBPH (3) are located at opposite ends of the solubilization tank (1) and the means for the outlet of the liquid phase (4) from the solubilization tank (1) are located at the end of said solubilization tank (1) through which the solid product comprising at least a fraction soluble in an HBPH (2) is introduced, i.e., at the end opposite to that of the means for feeding the liquid phase comprising an HBPH (3) to said solubilization tank (1). This arrangement is particularly useful to continuously perform the process of the invention.

In a particular embodiment, when the facility of the invention comprises two or more solubilization tanks (1) connected to one another in cascade, it can be designed such that the solid product comprising at least a fraction soluble in an HBPH (2), said fraction soluble in HBPH being increasingly depleted, is contacted with said HBPH (3) in successive solubilization tanks (1).

The solubilization tank (1) is provided with means for the outlet of a liquid phase (4) through which said liquid phase (4), such as the liquid phase identified as heavy liquid phase (HLP) in the process of the invention, is extracted, which allows generating turbulences which favor the solubilization of the solid product comprising at least a fraction soluble in an HBPH (2). In a particular embodiment, said means for the outlet of a liquid phase (4) are configured in the form of openings; therefore, in a particular embodiment, the solubilization tank (1) comprises one or more openings in its lower part, forming means for the outlet of a liquid phase (4), through which said liquid phase is extracted, thus generating turbulences favoring the solubilization of the solid product comprising at least a fraction soluble in an HBPH (2).

If desired, all or part of said liquid phase (4) can be recirculated to said solubilization tank (1) and introduced into said tank in countercurrent with respect to the feeding of the solid product comprising at least a fraction soluble in an HBPH (2), so in that case, the facility of the invention will be designed to include means for recirculating said liquid phase (4) to the solubilization tank (1), which include the feeding thereof into said tank, preferably at the end opposite to that of the inlet of the solid product comprising at least a fraction soluble in an HBPH (2).

In a particular embodiment, the solubilization tank (1) is further provided with means for the outlet of a solid phase (6); this arrangement is particularly useful when the solid product to be recycled comprising at least a fraction soluble in an HBPH (2) further contains a fraction insoluble in said HBPH and furthermore when said solid phase (6) is to be removed, for example, in the case of STs since an SP mostly containing fibers and steel mat which can be treated for the sale thereof as scrap is obtained after the solubilization process for the fraction soluble in HBPH of said ST

The system for transporting and containing said solid product to be recycled comprising at least a fraction soluble in an HBPH (2) is provided with means for transporting or containing said solid product comprising at least a fraction soluble in an HBPH (2) and introducing it into said solubilization tank (1); the design of said system for transporting or containing the solid product comprising at least a fraction soluble in an HBPH (2) will generally be determined by the solid product comprising at least a fraction soluble in an HBPH and by the operating mode of the process of the invention (continuous or discontinuous). By way of illustration, when the process of the invention operates discontinuously, the solid product comprising at least a fraction soluble in an HBPH (2) can be introduced into the solubilization tank (1) by means of a basket or the like, such that it remains submerged in the HBPH, inside the solubilization tank (1), for a time period sufficient to achieve the solubilization of the fraction soluble in said HBPH of the solid product comprising at least a fraction soluble in an HBPH (2). Said means (basket, chain or the like), will be subsequently removed for extracting the remaining solids, if any. In the case of tires, metal scrap and textile fibers are usually collected. Alternatively, when the process of the invention operates continuously, a chain provided with means for fixing the solid product comprising at least a fraction soluble in an HBPH (2), such as for example a strap and a snap harness or the like, can be used as a system for transporting the solid product comprising at least a fraction soluble in an HBPH (2).

The system for transporting and containing the solid product comprising at least a fraction soluble in an HBPH (2) can further be provided with means for removing the insoluble fraction (6) from the solid products to be recycled, corresponding to that referred to as solid phase (SP) in the process of the invention. In a particular embodiment, the means for removing the insoluble fraction from the solid product comprising at least a fraction soluble in an HBPH (2) present in the system for transporting said product are the same as the means for transporting or containing said solid product comprising at least a fraction soluble in an HBPH (2) and introducing it into said solubilization tank (1).

The gaseous phase (GP) (5) from the solubilization tank (1) can be treated to condense the fraction of condensable gases (FCG) and separate it from the fraction of incondensable gases (FIG); in this case, the facility of the invention also comprises, in a particular embodiment, a condensation system (7) for condensing a gaseous phase, such as a condenser, means which operatively connect said gaseous phase through the means for the outlet of a gaseous phase (5) from said solubilization tank (1) with said condensation system (7), which is further provided with means for discharging the fraction of condensable gases (FCG) and means for the outlet of the fraction of incondensable gases (FIG). In a particular embodiment, said gaseous phase (5) is removed through a coil submerged in water so that the condensation of the condensable gases having a boiling temperature greater than 100°C occurs, thus obtaining a product referred to as "diesel-like" in this description.

If desired, the facility of the invention can contain other equipment for the purpose of preparing the generated heavy liquid phase (HLP); by way of example, said HLP can be subjected to a gasification process in a suitable facility provided with means for gasifying said HLP and means for connecting the solubilization tank (1) to the gasification equipment through said means for the outlet of a liquid phase (4). In a particular embodiment, the facility of the invention includes a heated tank provided with a stirrer which allows storing the liquefied HLP generated at a temperature that allows maintaining the fluidity thereof. A pump can further be incorporated for metering the amount of HLP that is introduced into the gasifier and a heat exchanger for assuring the inlet at the selected design temperature.

The facility of the invention further contains pumps, valves, connections between equipment (e.g., tubes, pipes, etc.) necessary for performing the treatment process for products to be recycled provided by this invention.

As can be seen in Figure 1, a solid product comprising at least a fraction soluble in an HBPH (2), optionally subjected to a pretreatment prior to conditioning (e.g., washing, etc.) in a conditioning module (8), is introduced into a solubilization tank (1) into which a liquid phase containing an HBPH (3) previously heated after passing through means for heating (9) said liquid phase comprising the HBPH (3) is fed in countercurrent. After solubilizing the fraction soluble in HBPH contained in said solid product comprising at least a fraction soluble in an HBPH (2), the following are removed: (i) a liquid phase (4) which, if desired, can be completely or partially recirculated to the solubilization tank (1); (ii) a gaseous phase (5) which is passed through a gases condensation system (7) for condensing the fraction of condensable gases (FCG) and extracting said fraction of condensable gases (FCG) and a fraction of incondensable gases (FIG); and, optionally, (iii) a solid phase (6).

In a particular embodiment, when the product to be recycled according to the invention (2) is an ST, the process of the invention put into practice in a facility of the invention allows obtaining:
- a liquid phase (4) comprising a degasified liquid fuel with a high energy content and a very low volatility, the characteristics of which are comparable to those of fuel-oil which, if desired, can be used in a thermal conversion and gasification plant for the purpose of obtaining a synthesis gas with a high energy value and a trace level impurity content;
- a liquid product ("diesel-like") resulting from the condensation of the fraction of condensable gases (FCG) present in the gaseous phase (5), the characteristics of which allow it to be assimilated in a diesel fuel or refined petrol type fuel;
- a gaseous product corresponding to the fraction of incondensable gases (FIG) present in the gaseous phase (5) that can be assimilated in petroleum gas; and
- a solid phase (6) which, in the case of an ST, is mostly a scrap metal converted into byproduct and easily recoverable for the subsequent sale thereof as scrap

The following examples illustrate the invention and should not be considered in a sense limiting the scope thereof.

### EXAMPLE 1

### ST solubilization

This ST solubilization test was performed discontinuously for the purpose of knowing the solubilization process and the range of operating parameters.

Briefly, STs and a used mineral oil (HBPH), the characteristics of which are mentioned below, were put into contact in a heat-insulated reactor, at an oil:ST mass ratio of 6:1 (in one case) and 3:1 (in another case), at a temperature comprised between 300°C and 350°C for a time period comprised between 1 and 1-5 hours (operating time).

The oil used in this test was a mineral oil which contained the heavy fraction (feints) from the distillation of a mineral oil used in treatment plants for treating oils used in automotive and industrial machineries, specifically, used industrial oil with a relatively high bubble or initial vaporization point (T_{b}: 360-380°C), which has a high calorific value (GCV equal to or greater than 10,000 kcal/kg), low sulfur content (0.36%) and traces of chlorine (0.01%), the density of which is 877.6 kg/m³ (at 40°C) and the kinematic viscosity of which is 100.2 mm²/s (at 40°C) and considerably reduces with the temperature to values closed to 1 mm²/s (at 300°C), which has a toxic compound content less than the authorized limits (PCBs less than 50 ppm, etc.), thus meeting environmental requirements.

By operating in the aforementioned conditions, an increase in the degradation of the ST was observed when operating in the highest part of the temperature and operating time range. The ST goes from being slightly attacked by the oil used to being converted into a semisolid mass that partially dissolves. The proportion of ST dissolved in the oil can be increased if the temperature is increased above 350°C and the operating time exceeds 1.5 hours.

### EXAMPLE 2

### ST solubilization by means of a series of interlaced tests

This ST solubilization test was performed by means of a series of interlaced tests to approximate the operation to a continuous process for the purpose of, among others, simulating the performance of the process continuously to know its possible implementation in an industrial plant.

ST pieces of approximately 150X150X15 mm and the oil used in Example 1 at an oil:ST mass ratio of 6:1 at a temperature comprised between 350°C and 400°C for 3 hours (operating time) were used for performing this test.

Briefly, the process is performed in three steps, simulating a continuous countercurrent process, wherein the inlet flow of fresh oil (lower viscosity and minimum content of rubber/additives in solution) is mixed with the already degraded ST to complete the solubilization and depletion step of the rubber on the support of the ST. Simultaneously, as the rubber dissolves in the liquid phase, the rubber-oil mixture viscosity and rubber concentration gradually increase, complicating the material transfer step in the rubber-oil interface. However, in this initial step where the ST starts being slowly attacked and is in contact with a liquid phase at its maximum viscosity/concentration point, the mechanism controlling the efficacy of the cracking-dissolving process is actually based on the swelling effect of the rubber and the subsequent thermolysis-solvolysis thereof. In this step, temperature is the controlling factor of the process and allows preparing" the rubber for its subsequent dissolution with fresh oil in countercurrent.

By operating in these conditions, it was observed that at the end of the process, steel from the ST impregnated with a minimum quantity of oil, which can be cleaned completely by centrifugation or draining was obtained as a solid waste; likewise, the oil used in the final step contains a high content of dissolved ST (approximately 50%), so its viscosity greatly increases and it is difficult to handle at room temperature. When the process time and temperature increase, there is greater degradation of the ST, whereby increasing the amount of total gases produced and collected in the condensable gas tank.

### EXAMPLE 3

### Test with ST/oil loads at a mass ratio of 1:1, without mechanical stirring

This test was performed for the purpose of analyzing the ST solubilization test (cracking-dissolving) results, adjusting the amount of rubber/oil at a proportion of 50% (remaining working parameters open and simple load operation) and for studying the effect of the size of shredded ST on the efficacy of the overall solubilization process.

ST pieces of approximately 40X40X15 mm and an ST pellet of 2-3 mm and the oil used in Example 1 at an oil:ST mass ratio of 1:1 at a temperature comprised between 300°C and 450°C for 3-4 hours (operating time in steady state), without stirring or a basket for solids, were used for performing this test.

Briefly, the load consists of an ST bed soaked in oil (basket is not used) for the purpose of achieving a proportion of 50%. As there is no turbulence, a high temperature gradient is generated from the wall to the axial axis of the recipient (wall T: approximately 475°C and T in the center of the dissolution tank: approximately 250°C-300°C). The fact that the upper cover is not perfectly insulated, thus facilitating the partial condensation and vapor/condensate reflux, also contributes to increase the internal temperature gradient.

Two tests have been performed:
Test no 4: using ST pellet of 2 - 3 mm, previously refined (without metal particles or textile material) and sieved.
Test no 5: using shredded ST in the form of 40x40X15 "tables" directly obtained from ST. This latter sample is representative of the ST which is going to be processed in a plant since it contains wires, textile, etc., and has not been previously washed, or separated/sieved.

Both tests have been performed by fixing a retention time of 3 hours (once the continuous operating condition is achieved), a 475°C wall temperature of the liquation tank (temperature gradient in the radial direction from 475°C to 290°C), without stirring, removed from a continuous vapor flow with an approximate temperature of 100°C - 120° C, and reflux of a fraction of the vapor produced in the form of condensate (T_{b} > 100°C - 120°C).

By operating in the mentioned conditions, the ST pellet perfectly dissolves and all the ST pieces are entirely degraded. By increasing the proportion of oil/ST, more gases are generated as a product of ST decomposition (cracking), so more condensates which can be assimilated into commercial diesel and more incondensable gases are obtained. These two types of subproducts are fuels that can be used in furnace or boiler burners for energy exploitation or in engines for mechanical work or electricity production.

## Claims

1. A process for recycling a solid product comprising at least a fraction soluble in a high boiling point hydrocarbon, said process comprising:
a) contacting said solid product comprising at least a fraction soluble in a high boiling point hydrocarbon with a high boiling point hydrocarbon (HBPH) under conditions which allow solubilizing the fraction of said product soluble in said HBPH and generating:
- a heavy liquid phase (HLP) comprising the products in liquid phase resulting from solubilizing said solid product comprising at least a fraction soluble in an HBPH in said HBPH; and
- a gaseous phase (GP) comprising a fraction of condensable gases and a fraction of non-condensable gases; and, optionally,
- a solid phase (SP) comprising the fraction insoluble in said HBPH of said solid product comprising at least a fraction soluble in HBPH;
b) separately removing each of said HLP, GP and, optionally, SP phases; and
c) condensing said gaseous phase (GP) and separating the fraction of condensable gases from the fraction of non-condensable gases.

2. The process according to claim 1, wherein said solid product comprising at least a fraction soluble in a high boiling point hydrocarbon (HBPH) is selected from the group consisting of tires, plastic materials and mixtures thereof.

3. The process according to claim 2, wherein said solid product comprising at least a fraction soluble in a high boiling point hydrocarbon (HBPH) is selected from the group consisting of whole used tires, shredded used tires, plastic materials comprising polyethylene, polypropylene, polyethylene terephthalate, and mixtures thereof.

4. The process according to claim 1, wherein said high boiling point hydrocarbon (HBPH) is a paraffinic or olefinic type solvent with a boiling point equal to or greater than approximately 250°C.

5. The process according to claim 4, wherein said high boiling point hydrocarbon (HBPH) is selected from the group consisting of mineral oils, feints, fuel-oil and mixtures thereof.

6. The process according to claim 1, wherein said solid product comprising at least a fraction soluble in a high boiling point hydrocarbon with a high boiling point hydrocarbon (HBPH) is contacted with said high boiling point hydrocarbon (HBPH) at a temperature comprised between approximately 250°C and approximately 400°C.

7. The process according to claim 1, wherein said high boiling point hydrocarbon (HBPH) is subjected to stirring or is circulated in countercurrent with respect to the movement of said solid product comprising at least a fraction soluble in a high boiling point hydrocarbon (HBPH).

8. The process according to claim 1, which further comprises recirculating all or part of said HLP.

9. The process according to claim 1, wherein said process is continuously or discontinuously performed.

10. A facility for recycling a product comprising at least a fraction soluble in a high boiling point hydrocarbon (HBPH) by means of a process according to claim 1, said facility comprising:
- at least one solubilization tank (1) provided with means for the inlet of a solid product to be recycled comprising at least a fraction soluble in an HBPH (2), means for the inlet of a liquid phase comprising an HBPH (3), means for the outlet of a liquid phase (4), and means for the outlet of a gaseous phase (5);
- a system for transporting or containing said solid product to be recycled comprising at least a fraction soluble in an HBPH (2) provided with means for transporting or containing said product to be recycled according to the invention and introducing it into said solubilization tank (1);
- means for feeding a liquid phase comprising an HBPH (3) to said solubilization tank (1); and
- a system for condensing a gaseous phase (7) operatively connected to said means for the outlet of a gaseous phase (5).

11. The facility according to claim 10, wherein said solubilization tank (1) is provided with stirring means, and/or with one or more openings in its lower part, and/or with means for removing the fraction insoluble (6) in HBPH from the solid product comprising a fraction soluble in an HBPH.

12. The facility according to claim 10, wherein said system for transporting or containing said solid product comprising at least a fraction soluble in an HBPH (2), comprises a basket or a chain provided with means for fixing said solid product and, optionally, means for removing the fraction insoluble (6) in HBPH from said product comprising at least a fraction soluble in an HBPH (2).

13. The facility according to claim 10, wherein said means for the inlet of said solid product comprising at least a fraction soluble in an HBPH (2) are located at the end opposite to that of the means for feeding said liquid phase comprising an HBPH (3).

14. The facility according to claim 10, wherein said means for the outlet of said liquid phase (4) are located at the end opposite to that of the means for feeding said liquid phase comprising an HBPH (3).
